# EUROPEAN PATENT SPECIFICATION

(11) **EP 4 332 054 B1**
(45) Date of publication and mention of the grant of the patent: **02.10.2024**
(21) Application number: 22209471.6
(22) Date of filing: 24.11.2022
(51) Int. Cl.: C01B 21/086, C01B 21/093

(54) **COMPOSITION COMPRISING AN ALKALI METAL SALT OF BIS(FLUORO SULFONYL)IMIDE**
ZUSAMMENSETZUNG MIT EINEM ALKALIMETALLSALZ AUS BIS(FLUORSULFONYL)IMID
COMPOSITION COMPRENANT UN SEL DE MÉTAL ALCALIN DE BIS(FLUOROSULFONYL)IMIDE

(43) Date of publication of application: 06.03.2024
(73) Proprietor: SPECIALTY OPERATIONS FRANCE, 69003 Lyon (FR)
(72) Inventor: SCHMITT, Etienne, 69190 Saint-Fons (BE); LE GUYADER, Frédéric, 69100 Saint-Fons (FR); ROQUES, Nicola, 69190 Saint-Fons (FR)
(74) Representative: Ferri, Isabella

(56) References cited:
- WO-A1-2020/099527
- WO-A1-2021/074142
- CN-A- 113 603 069
- US-A1- 2020 155 963

## Description

### Cross reference to related patent applications

### Technical field

The present invention relates to a composition comprising an alkali metal salt of bis(fluoro sulfonyl)imide and to the use of such composition in an electrolyte for batteries.

### Background

Bis(fluorosulfonyl)imide and salts thereof, in particular the lithium salt of bis(fluorosulfonyl)imide (LiFSI), are useful compounds in a variety of technical fields, including in battery electrolytes.

Several methods for the manufacture of LiFSI have been described in the art. Among the various technologies described, the majority uses a fluorination reaction with a fluorinating agent in a solvent.

Many efforts have also been taken in the art to improve the manufacturing methods of the intermediate compounds leading to LiFSI, in particular with regard to purity, yield and cost reduction.

US 2014/0075746 (in the name of Arkema France) discloses a process for the preparation of a bis(sulphonato)imide salt of formula:

(III) (SO₃⁻)- N⁻- (SO₃⁻) 3C⁺

wherein C⁺ represents a monovalent cation,
the process comprising the reaction of amido-sulphoric acid of formula:

   (I) HO-SO₂-NH₂
with a halo-sulphonic acid of formula:

   (II) HO-SO₂-X
wherein X represents a halon atom,
and comprising a reaction with a base which is a salt formed with cation C⁺. According to an embodiment of such a process, the reaction between compounds of formula (I) and (II) is conducted in the presence of a first base, to provide a bis(sulphonyl)imide of formula :

   (IV) HO-SO₂-NH-SO₂-OH
which is then reacted with a second base, which is a salt formed with cation C⁺ to provide the compound of formula (III) above.

The compound of formula (III) thus obtained is further purified in water or other polar solvents, such as alcohols.

US 2017/0204124 (in the name of Central Glass Company Limited) discloses an ionic complex that is said to contribute to the high-temperature durability of a nonaqueous electrolyte battery. This patent document discloses among the others compounds of formula: 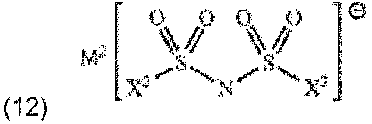 and 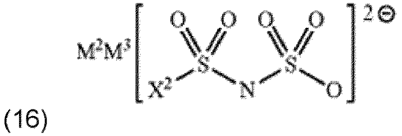 wherein
X² and X³ are independently a fluorine atom, or a group selected from alkyl, alkenyl, aryl, etc., and M² and M³ being a proton, a metal cation or an onium cation.

US 2020/0328474 (in the name of Central Glass Company Limited) further discloses ionic complexes containing - among the others - compounds of formula: 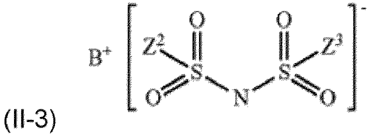 and 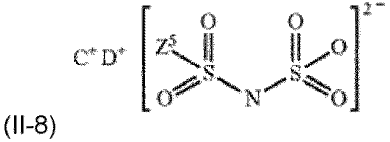 wherein each of Z², Z³ and Z⁵ can be a fluorine atom and B⁺, C⁺ and D⁺ are each a proton, a metal ion or an onium ion.

The importance of the purity of the electrolyte compositions comprising bis(fluorosulfonyl)imide is known in the art.

For example, EP 3316381 (Nippon Shokubai) discloses a liquid conductive material characterized by diminished turbidity and a method for producing and purifying such conductive material. More in particular, the production and purification method is characterized by filtering a solution containing the fluorosulfonylimide salt using a filter comprising at least one material selected from cellulose, polyester resin, silicon dioxide material and activated carbon.

WO 2007/025361 (Hydro-Quebec) discloses a process for the purification of an ionic electrolyte comprising at least one alkali metal salt, the process having at least one stage in which particles of at least one calcium salt are brought into contact. The process makes it possible to obtain electrolytes characterized in particular by a particularly low water content. Example 2 discloses a solution of LiFSI in ethylene carbonate and gamma-butyrolactone, having a water content of 1000 ppm and a yellowish color, while after purification, the water content is reduced to 1 ppm and the color of the solution is light.

JP 2013-084562 (Nippon Shokubai CO., Ltd.) discloses an electrolyte comprising an ionic compound and a free acid with less than 25 ppm (by mass). Said electrolyte is manufactured by mixing the ionic compound and a hydrocarbon-based solvent and/or a carbonate-based solvent, followed by distilling some or all of the solvent off; and/or a step of contacting with a molecular sieve. The examples start from compositions wherein a lithium bis (fluoro sulfonyl) imide was placed in ethylene carbonate / ethyl methyl carbonate, then a molecular sieve step was performed and the solution was then stored for 2 months in an environment of 25 °C temperature.

WO 2020/242015 (SK Chemicals Co., Ltd.) discloses an electrolyte solution for a secondary battery comprising a combination of a small amount of stabilizer and a particular sulfate-based additive and/or a sulfonate additive, said solution retaining an initial (immediately after the preparation of the electrolyte solution) color or transparency for a long time in a temperature range from low temperature to high temperature.

CN 112825371 (Zhuhai Cosmx Battery Co., Ltd.) discloses that the cycle performance and the high-temperature storage performance of the high-voltage lithium ion battery can be improved by adding the 1,3,6-hexane trinitrile into the electrolyte, and the chromaticity of the electrolyte containing the substance can be controlled by controlling the chromaticity of the 1,3,6-hexane trinitrile, so that the chromaticity requirements for production and storage of the electrolyte of the lithium ion battery can be met.

CN 113603069 (Jiangsu Huasheng Lithium Battery Material Co. Ltd.) discloses a method of removing trace impurities from lithium bis(tri-fluoro sulfon)imide, which comprises: (1) adding a good solvent to a mixture of lithium bis(tri-fluoro sulfon)imide salt and an inert solvent to provide a first filtrate after filtration; (2) adding a degermination agent to said filtrate to form a mixed solution to provide a second filtrate after filtration; and (3) distilling said second filtrate under reduced pressure to provide a product of lithium bis(tri-fluoro sulfon)imide salt. The index of the finished product of bis(fluoro sulfone)imide lithium salt complies with a combination of one or more of the following: ion chromatography content greater than or equal to 99.5 percent, wherein sulfate impurity anions less than or equal to 100 ppm, fluoride impurity anions are less than or equal to 200 ppm, sulfamic acid content anions are less than or equal to 10 ppm, fluorosulfonic acid impurity anions less than or equal to 10 ppm, acidic impurities less than or equal to 100 ppm, the turbidity of 10 percent dimethyl carbonate solution is less than or equal to 20 mg/L and chromaticity less than or equal to 20 Hazen.

### Summary of the invention

The Applicant is aware that despite all the attempts in the art, there is still the need for a composition comprising an alkali metal salt of bis(fluoro sulfonyl) imide showing improved electrical properties when used in battery applications, said composition being also easy to prepare at industrial scale.

In particular, the Applicant faced the problem of providing a composition, having a lower content of impurities compared to compositions known in the art. Indeed, contrary to the methods proposed in the art, the Applicant faced the problem of providing a composition that can be prepared via a method that is the least expensive when implemented at industrial scale, in particular by limiting or avoiding the use of peculiar compounds in the manufacturing method, which decrease the need for additional purification steps.

The Applicant has surprisingly found a composition comprising an alkali metal salt of bis(fluoro sulfonyl)imide, such composition being characterized by the presence of a specific compound in a determined amount. To the best of the Applicant knowledge, such compound has never been disclosed in the art as ingredient in a bis(fluoro sulfonyl) imide composition. Without being bound by any theory, the Applicant is of the opinion that the presence of such a compound influences the electrical properties of the composition of the invention, when compared to compositions already known in the art.

The composition according to the present invention can be advantageously used as electrolyte in battery applications.

### Disclosure of the invention

In the present application:
- all the numerical ranges should be understood as including the limits, unless otherwise specified;
- any description, even though described in relation to a specific embodiment, is applicable to and interchangeable with other embodiments of the present invention;
- where an element or component is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components; any element or component recited in a list of elements or components may be omitted from such list.

In a first aspect, the the present invention relates to a composition [composition (COMP)] comprising:
- at least one alkali metal salt of bis(fluoro sulfonyl)imide [FSI-salt];
- at least one compound of formula (I) as represented below or an alkali metal salt thereof 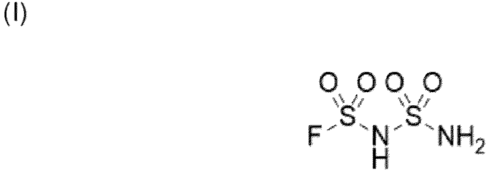
in an amount below 25 ppm, as measured by ionic chromatography.

Preferably, composition (COMP) comprises said compound of formula (I) or the alkali metal salt thereof in an amount preferably below 15 ppm.

Preferably, composition (COMP) comprises said compound of formula (I) or the alkali metal salt thereof in an amount of at least 0.1 ppm, more preferably of at least 0.5 ppm, even more preferably of at least 1.0 ppm.

Optionally, composition (COMP) can comprise further compounds and/or ingredients.

For example, composition (COMP) can comprise at least one alkali metal salt of FSO₃⁻ in an amount up to 100 ppm, as measured by ionic chromatography.

Preferably, said composition (COMP) comprises said at least one alkali metal salt of FSO₃⁻ in an amount from 0.1 ppm to 100 ppm, preferably from 0.5 ppm to 50 ppm, more preferable from 0.5 ppm to 20 ppm and even more preferably from 0.5 ppm to 5 ppm.

In alternative or at the same time, composition (COMP) can comprise at least one compound of formula (II) or an alkali metal salt thereof:

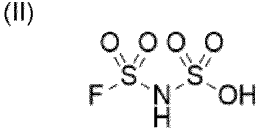

Preferably, said compound of formula (II) is in an amount up to 100 ppm as measured by ionic chromatography.

Preferably, composition (COMP) comprises said compound (II) in an amount of from 0.5 ppm, more preferably from 0.5 ppm to 100 ppm, even more preferably from 0.5 ppm to 50 ppm, still more preferable from 0.5 ppm to 20 ppm and more more preferably from 0.5 ppm to 5 ppm. As will be further explained in the experimental section, the amounts given for compound (II) are measured by ionic chromatography and calculated based on SO₄²⁻response factor.

For sake of clarity, it should be understood that compounds (I) and (II) exist as represented above or in their deprotonated forms.

For example, compound (I) exists as follows: 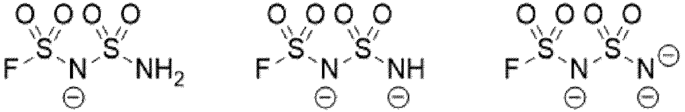 and/or

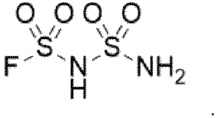

Similarly, compound (II) exists as follows: 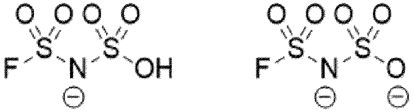 and/or

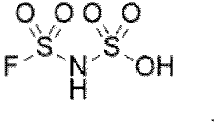

Preferably, said alkali metal in each of the FSI-salt, in the alkali metal salt of compound of formula (I) and in the alkali metal salt of compound of formula (II) is selected from lithium, sodium and potassium.

Preferably, said composition (COMP) is a liquid composition.

According to this embodiment, composition (COMP) further comprises at least one solvent [solvent (S1)].

Preferably, said at least one solvent (S1) is selected in the group comprising, more preferably consisting of: ethylene carbonate, propylene carbonate, butylene carbonate, γ-butyrolactone, γ-valerolactone, dimethoxymethane, 1,2-dimethoxyethane, tetrahydrofuran, 2-methyltetrahydrofuran, 1,3-dioxane, 4-methyl-1,3- dioxolane, methyl formate, methyl acetate, methyl propionate, dimethyl carbonate, ethyl methyl carbonate, diethyl carbonate, sulfolane, 3-methylsulfolane, dimethylsulfoxide, N,N-dimethylformamide, N-methyl oxazolidinone, acetonitrile, valeronitrile, benzonitrile, ethyl acetate, isopropyl acetate, n-butyl acetate, nitromethane and nitrobenzene.

Even more preferably, said solvent (S1) is selected from ethylene carbonate, propylene carbonate, butylene carbonate, tetrahydrofuran, dimethyl carbonate, ethyl methyl carbonate, diethyl carbonate, ethyl acetate, isopropyl acetate and n-butyl acetate, even more preferred solvents include dimethyl carbonate, ethyl methyl carbonate, diethyl carbonate, ethyl acetate, isopropyl acetate and n-butyl acetate. Advantageously, said solvent (S1) is selected from ethyl methyl carbonate and n-butyl acetate.

More preferably, said composition (COMP) comprises from 1 to 70 wt.%, even more preferably from 5 to 50 wt.% and still more preferably from 15 to 40 wt.% of said at least one alkali metal salt of bis(fluoro sulfonyl)imide based on the total weight of said liquid composition.

Advantageously, composition (COMP) according to the present invention is further characterized by a low moisture content.

Preferably, composition (COMP) has a moisture content equal to or less than 15 ppm, as measured by Karl-Fisher titration.

Advantageously, composition (COMP) according to the present invention is further characterized by a low content of alcohol.

Preferably, composition (COMP) has a total alcohol content equal to or less than 20 ppm, as measured by head-space gas chromatography (HS-GC-FID).

Preferably and advantageously, all raw materials used in the method according to the invention, including reactants, may preferably show very high purity.

Preferably, their content of metal components such as Na, K, Ca, Mg, Fe, Cu, Cr, Ni, Zn, is below 10 ppm, more preferably below 5 ppm, or below 2 ppm.

The process for manufacturing the composition (C) according to the present invention is not limited.

For example, according to an embodiment, composition (COMP) may be manufactured via a method comprising the following steps:
(a) reacting bis(chloro sulfonyl)imide (HCSI) or a salt thereof and ammonium fluoride in a solvent, so as to provide ammonium bis(fluorosulfonyl)imide (NH₄-FSI) in the form of suspension;
(b) filtering the suspension obtained in step (a);
(c) adding an anti-solvent, so as to precipitate the NH₄-FSI in the form of a solid;
(d) reacting the NH₄-FSI obtained in step (c) with at least one salification agent comprising at least one alkali metal salt in a solvent, so as to obtain composition (COMP).

The steps (a) to (d) can be carried out in a batch, semi-batch or continuous mode.

Preferably, the HCSI is in the form of a solid or in its molten state. More preferably, when the HCSI is provided in its molten state, before step (a), a step of pre-heating the HCSI at a temperature of at least 40°C is performed. Advantageously, said preheating step is performed at a temperature higher than 40°C. More preferably, said preheating step is performed at a temperature lower than 150°C.

As used above and within the present invention, the expression "ammonium fluoride" includes NH₄F and HF adducts of ammonium fluoride, for example NH₄F(HF)ₙ, wherein n is 1 to 10, preferably 1 to 4, more preferably NH₄F.HF or NH₄F(HF)₂. The fluorinating agent may be commercially available, or produced by a known method.

Preferably, the ammonium fluoride is in the form of a solid.

According to a preferred embodiment, ammonium fluoride is anhydrous. More preferably, the moisture content is 500 ppm or less.

The amount of ammonium fluoride used is preferably between 2 and 5 equivalents, per 1 mol of the bis(chlorosulfonyl)imide or the salt thereof.

Preferably, the solvent of step (a) is selected from aprotic organic solvents. More preferably, said solvent is selected in the group comprising:
- cyclic and acyclic carbonates, for instance ethylene carbonate, propylene carbonate, butylene carbonate, dimethyl carbonate, ethyl methyl carbonate, diethyl carbonate,
- cyclic and acyclic esters, for instance gamma-butyrolactone, gamma-valerolactone, methyl formate, methyl acetate, methyl propionate, ethyl acetate, ethyl propionate, isopropyl acetate, propyl propionate, butyl acetate,
- cyclic and acyclic ethers, for instance diethyl ether, diisopropyl ether, methyl-t-butyl ether, dimethoxymethane, 1,2-dimethoxyethane, tetrahydrofuran, 2-methyltetrahydrofuran, 1,3-dioxane, 4-methyl-1,3-dioxane, 1,4-dioxane,

- amide compounds, for instance N,N-dimethylformamide, N-methyl oxazolidinone,
- sulfoxide and sulfone compounds, for instance sulfolane, 3-methyl sulfolane, dimethylsulfoxide,
- cyano-, nitro-, chloro- or alkyl- substituted alkane or aromatic hydrocarbon, for instance acetonitrile, valeronitrile, adiponitrile, benzonitrile, nitromethane, nitrobenzene.

According to a preferred embodiment, the organic solvent for step (a) is selected from the group consisting of ethyl acetate, isopropyl acetate, butyl acetate, ethylene carbonate, dimethyl carbonate, ethyl methyl carbonate, propylene carbonate, valeronitrile and acetonitrile.

According to a preferred embodiment, the organic solvent is anhydrous.

Step (a) is preferably carried out at a temperature of between 0°C and 200°C, preferably between 30°C and 150°C and more preferably between 50°C and 100°C.

Preferably, step (a) is carried out at atmospheric pressure. However, the reaction can be performed below or above atmospheric pressure.

The order in which the reactants are added is not limited. According to a preferred embodiment, the ammonium fluoride is first added to the organic solvent. Then, the bis(chlorosulfonyl)imide or a salt thereof may be added to the reaction medium.

The method for manufacturing the starting HCSI or a salt thereof is not limited.

For example, HCSI can be prepared by reacting chlorosulfonyl isocyanate and chlorosulfonic acid.

Preferably, HCSI is prepared under heating, more preferably at a temperature in the range from 80°C to 180°C.

HCSI thus obtained can be directly used in the method according to the present invention. Alternatively, HCSI thus obtained can be purified before being used in the method according to the present invention. For example, such purification can be performed by distillation.

Preferably, the anti-solvent used in step (c) is selected in the group comprising, more preferably consisting of: dichloromethane, 1,2-dichloroethane, chloroform, carbon tetrachloride, 1,1,2,2-tetrachloroethane, chlorobenzene, dichlorobenzene, trichlorobenzene, diethyl ether, diisopropyl ether, methyl t-butyl ether, pentane, hexane, heptane. Dichloromethane is particularly preferred.

Preferably, said at least one alkali metal salt in the salification agent used in step (d) is selected from lithium, sodium and potassium.

When the salification agent comprises lithium as the alkali metal salt, then the agent is preferably selected from the group consisting of lithium chloride (LiCl), lithium fluoride (LiF), lithium carbonate (Li₂CO₃), lithium sulfate (Li₂SO₄), lithium carboxylate (Liₙ(RCO₂)ₙ), Li₂SiO₃, Li₂B₄O₇ and mixtures thereof.

Preferably, the solvent of step (d) is selected from aprotic organic solvents. More preferably, said solvent is selected in the group comprising the solvents detailed above for step (a).

According to a preferred embodiment, the organic solvent for step (d) is selected from the group consisting of ethyl acetate, isopropyl acetate, butyl acetate, ethylene carbonate, dimethyl carbonate, ethyl methyl carbonate, propylene carbonate, valeronitrile and acetonitrile.

Step (d) is preferably carried out at a temperature of between -50°C and 100°C, preferably between -25°C and 50°C and more preferably between - 5°C and 10°C.

Preferably, step (d) is carried out at atmospheric pressure. However, the reaction can be performed below or above atmospheric pressure.

In a further object, the present invention relates to the use of said composition (C) as a non-aqueous electrolyte solution in a battery.

Should the disclosure of any patents, patent applications, and publications which are incorporated herein by reference conflict with the description of the present application to the extent that it may render a term unclear, the present description shall take precedence.

The present invention will be now described in more detail with reference to the following examples, whose purpose is merely illustrative and not intended to limit the scope of the disclosure.

### EXAMPLES

### Methods

Ionic chromatography (IC). The anionic impurities were determined by IC using a Dionex ICS-3000 system with conductivity detection, with the following components:
- column: AS20 4*250mm Analytical and AG20 4*50mm Guard
- suppressor: ASRS 300-4mm, external water additional type.

The amounts of F-, Cl⁻, FSO₃⁻ (or LiFSO₃) in LiFSI solutions were measured quantitatively after calibration using commercial standard solutions (F⁻, Cl⁻) or commercial samples of KFSOs.

The amounts of compounds (I- NFSI) and (II - OFSI) were calculated based on SOa²⁻ response factor.

The alcohol content was determined by GC (Agilent 6890N network GC system) equipped with FID detector and Headspace injector, with Split/splitless injection system.

The ¹⁹F-NMR purity of LiFSI was determined using the Area% method on a Bruker advance NMR 300MHz equipment.

| Product | FSO₂N(Li)SO₂F | LiFSO₃ | FSO₂NH₂ |
|---|---|---|---|
| Chemical shift in ppm | 52.8 | 39.6 | 58.4 |

The moisture content of final LiFSI solutions was determined under an inert atmosphere by means of a KF Titrator, such as Mettler C30S device.

### Example 1 - Preparation of LiFSI Grade A according to the invention

Synthesis of HCSI. Into a glass-lined 2 m³ vessel equipped with baffles, a mechanically stirred shaft, a glass-lined DN300 distillation column and heat exchanger, pressure and temperature sensors and liquid and gas glass-lined inlets and outlets, a PTFE-venting, PTFE-gaskets and receiving glass-lined tanks, the whole system being connected to an alkali scrubber, were reacted chlorosulfonyl isocyanate (983 kg) and chlorosulfonic acid (850 kg) by heating progressively to 100-120°C, then up to 140-145°C over 22 h until gas evolution stopped. The reaction mixture was distilled in order to isolate a pure HCSI fraction (1100 kg).

Synthesis of ammonium-FSI. Into a PFA-coated 5 m³ vessel equipped with PFA-lined baffles, a mechanically stirred PFA-coated shaft, a PTFE-lined connectors and heat exchanger, the whole system being connected to an alkali scrubber, ethyl methyl carbonate (3200 kg) and anhydrous ammonium fluoride (840 kg) were introduced. The suspension was homogenized before the HCSI (1098 kg) obtained as disclosed above was introduced progressively, while maintaining the mixture's temperature below 80°C. After complete addition, the suspension was heated at 80°C for 22 h and cooled to room temperature (RT). The resulting slurry was filtered and the cake washed with additional ethyl methyl carbonate (800 kg). The resulting filtrate (4639 kg) was transferred to a separate 5 m³ steel vessel equipped with a mechanically stirred shaft, baffles, liquid and gas inlets and outlets and a distillation equipment. The filtrate was mixed with water (139 kg) and 25% aqueous ammonia (30 kg) and stirred at RT for 1 h. Then, wet ethyl methyl carbonate was distilled off, and the resulting concentrate (1482 kg) was filtered and transferred into a glass-lined 5 m³ vessel equipped with baffles, a mechanically stirred shaft and a heat exchanger. The filtered concentrate was precipitated by controlled addition of dichloromethane (2400 kg). The resulting slurry was filtered onto a stainless steel 5 m³ filter, the cake washed with additional dichloromethane (600 kg). Crude ammonium bis(fluoro sulfonyl)imide was isolated as a wet solid and further dried to provide a crude dry product (888 kg). The crude NH₄FSI was partitioned in 3 batches and each batch was separately purified. Each batch was dissolved at 20 wt.% in trifluoroethanol at 60-65 °C into a 5 m³ steel vessel equipped with baffles, a mechanically stirred shaft, a heat exchanger, pressure and temperature sensors and liquid and gas inlets and outlets, a PTFE-venting, PTFE-gaskets and receiving tanks, the whole system being connected to an organic vapors management system. After complete dissolution, 1,4-Dioxane was added over 3 h. After complete 1,4-Dioxane addition, the suspension was cooled to 25 °C over 3 h and maintained at RT for 12 h. The resulting slurry was filtered, and the white solid thus obtained was washed with TFE/Dioxane (75/25 w/w). This protocol was repeated until the impurity profile reached the intermediate required specifications.

Synthesis of LiFSI. Lithiation was performed into a glass-lined 5 m³ vessel equipped with baffles, a mechanically stirred shaft, and a heat exchanger, as follows. A 10 wt% solution (based on NH₄FSI) of NH₄FSI.Dioxane in ethyl methyl carbonate was prepared, filtered, then was subjected to a first lithiation step by adding at 1.1 eq of LiOH.H₂O at atmospheric pressure (Patm) and 0 °C to the solution. This mixture was stirred at Pₐₜₘ over 22 h at 0°C. A second step of ammonia removal was then performed until the NH₄⁺ residual content was <10 ppm, and the residual 1,4-dioxane content was < 100 ppm. All the 3 batches were subsequently filtered and the resulting filtrates were submitted to distillation.

Three batches were obtained, each containing 30 wt.% LiFSI in EMC, which were characterized by NMR, GC Head-space, ionic chromatography, KF, ICP, turbidimetry, colorimetry and pH. The results are reported in Table 1 as average.

### Comparative Example 1 - Preparation of LiFSI Grade B of comparison

The LiFSI solution employed in comparative example 1 is prepared according to the method described in Example 1 and Example 3 of patent application published as WO 2021/074142 (in the name of Solvay SA).

Three batches were obtained, each containing 30 wt.% LiFSI in EMC, which were characterized by NMR, GC Head-space, ionic chromatography, KF, ICP, and pH. The results are reported in Table 1 as average.

**Table 1**

| | **Example 1 LiFSI Grade A** | **Comp Example 1(*) LiFSI Grade B** |
|---|---|---|
| **FSO₃⁻** | < 1 ppm | 121.3 ppm |
| **compound (I)** | < 1 ppm | 32.3 ppm |
| **compound (II)** | 79.3 ppm | 155 ppm |
| **Alcohol** | < 20 ppm | < 34 ppm |
| **Moisture** | 11.3 ppm | 34.0 ppm |
| **F⁻** | < 1 ppm | 3 ppm (A) |
| **Cl⁻** | < 1 ppm | 3 ppm (^) |
| **pH** | 6.1 | 5.6 |
| **Na⁺** | <1 ppm | <1 ppm |
| **K⁺** | <1 ppm | 2 ppm |
| **Other metals** | <1 ppm | <1 ppm |

| | | |
|---|---|---|
| (*) of comparison (^) value obtained on one batch only < 1 ppm is intended to indicate a value below the quantification limit of the method used, but above the detection limit of the method. | | |

Each of the compositions comprising EMC and LiFSI prepared as described above in Example 1 and Comparative Example 1 were used for preparing the formulations suitable to be tested in pouch cells.

Three batches of Formulation A according to the invention were prepared. Two batches of Formulation B of comparison were prepared. The Formulations A and the Formulations B comprised the ingredients shown below:

| | Formulations A | Formulations B(*) |
|---|---|---|
| LiPF6 | 1 M | 1 M |
| Ethyl carbonate (EC) | 30% v/v | 30% v/v |
| Ethyl methyl carbonate (EMC) | 70% v/v | 70% v/v |
| LiFSI grade A | 5 wt. % | - |
| LiFSI grade B | - | 5 wt. % |

| | | |
|---|---|---|
| (*) comparison | | |

A commercial solution of LiFSI 5 wt.% in EMC (considered a benchmark in this technical field) was used as a further comparison.

The pouch cells were as follows: NCM622/graphite from UTP (4.2V, 965.3 mAh). Test temperature was 45°C. Charge: 1C / 4.2V (CC-CV). Discharge: 1C /3.0C (CC).

The cells were tested for discharge capacity and thickness change. The results are summarized in the following tables.

**Table 2**

| | **Initial discharge capacity (mAh)** | **Retention capacity (%) after 500 cycles** |
|---|---|---|
| **Commercial Sample(*)** | 896.7 | 73.5 % |
| **Formulation A batch 1** | 906.7 | 73.1 % |
| **Formulation A batch 2** | 906.2 | 73.4 % |
| **Formulation A batch 3** | 904.6 | 73.3 % |
| **Formulation B batch 1(*)** | 899.0 | n/p |
| **Formulation B batch 2(*)** | 898.0 | n/p |

| | | |
|---|---|---|
| (*) of comparison | | |

**Table 3 - Thickness change during storage test at 60°C**

| | **Commercial Sample(*)** | **Formulation A1** | **Formulation A2** | **Formulation A3** |
|---|---|---|---|---|
| Initial | 2.90 mm | 2.91 mm | 2.93 mm | 2.92 mm |
| 1 week | 12.11 mm | 11.81 mm | 11.78 mm | 11.68mm |
| 2 weeks | 12.59 mm | 12.23 mm | 12.24 mm | 12.17 mm |
| 3 weeks | 12.49 mm | 12.24 mm | 12.30 mm | 12.30 mm |
| 4 weeks | 12.66 mm | 12.30 mm | 12.55 mm | 12.52 mm |
| delta (initial-4w) | 436.6% | 422.7% | 428.3% | 428.8% |

| | | | | |
|---|---|---|---|---|
| (*) of comparison | | | | |

As shown in Table 2, the formulations according to the present invention showed a higher initial discharge capacity than the benchmark and after 500 cycles, they maintained a retention capacity comparable to the benchmark. Differently, as shown in Table 3, compared to the benchmark, the formulations according to the present invention had a lower thickness change during storage test at 60°C (which is due to a diminished gas evolution and degradation within the pouch cell).

Differently, the formulations B (of comparison) had an initial discharge capacity below 900, which was lower than the initial of formulations A according to the invention.

## Claims

1. A composition [composition (COMP)] comprising:
- at least one alkali metal salt of bis(fluoro sulfonyl)imide [FSI-salt];
- at least one compound of formula (I) or an alkali metal salt thereof as represented in the following formulae, in an amount below 25 ppm, as measured by ionic chromatography :

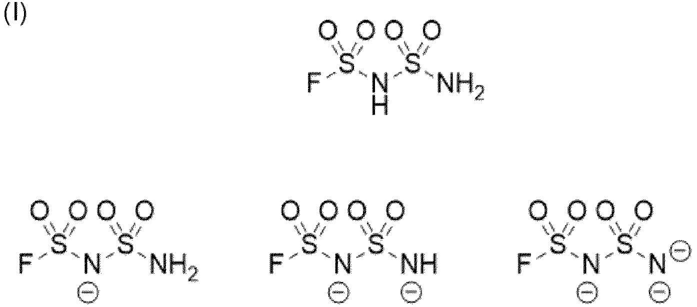

2. The composition (COMP) according to Claim 1, wherein said compound of formula (I) or the alkali metal salt thereof is in an amount of at least 0.1 ppm, more preferably of at least 0.5 ppm, even more preferably of at least 1.0 ppm.

3. The composition (COMP) according to any one of Claim 1 and 2, wherein composition (COMP) comprises at least one alkali metal salt of FSO₃⁻ .

4. The composition (COMP) according to Claim 3, wherein said alkali metal salt of FSO₃⁻ is in an amount of from 0.1 ppm and/or up to 100 ppm, as measured by ionic chromatography.

5. The composition (COMP) according to any one of Claims 1 to 4, wherein composition (COMP) comprises at least one compound of formula (II) or an alkali metal salt thereof as represented in the following formulae:

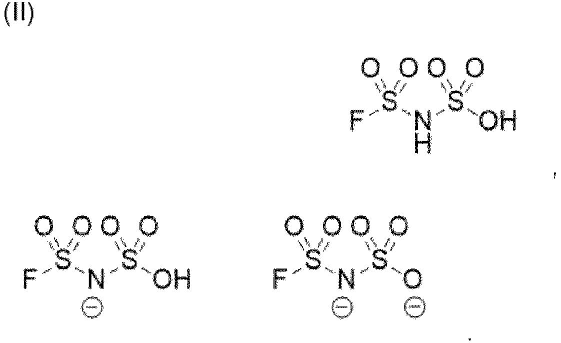

6. The composition (COMP) according to Claim 5, wherein said compound of formula (II) or the alkali metal salt thereof is in an amount of from 0.5 ppm and/or up to 100 ppm, as measured by ionic chromatography.

7. The composition (COMP) according to any one of Claims 1 to 6, wherein said alkali metal in each of the FSI-salt, in the alkali metal salt of compound of formula (I) and in the alkali metal salt of compound of formula (II) is selected from lithium, sodium or potassium.

8. The composition (COMP) according to any one of Claims 1 to 7, wherein said composition (COMP) is a liquid composition.

9. The composition (COMP) according to Claim 8, wherein said composition (COMP) further comprises at least one solvent [solvent (S1)].

10. The composition (COMP) according to Claim 9, wherein said at least one solvent (S1) is selected in the group comprising, more preferably consisting of: ethylene carbonate, propylene carbonate, butylene carbonate, γ-butyrolactone, γ-valerolactone, dimethoxymethane, 1,2-dimethoxyethane, tetrahydrofuran, 2-methyltetrahydrofuran, 1,3-dioxane, 4-methyl-1,3- dioxolane, methyl formate, methyl acetate, methyl propionate, dimethyl carbonate, ethyl methyl carbonate, diethyl carbonate, sulfolane, 3-methylsulfolane, dimethylsulfoxide, N,N-dimethylformamide, N-methyl oxazolidinone, acetonitrile, valeronitrile, benzonitrile, ethyl acetate, isopropyl acetate, n-butyl acetate, nitromethane and nitrobenzene.

11. The composition (COMP) according to any one of Claims 1 to 10, said composition (COMP) comprising from 1 to 70 wt.%, even more preferably from 5 to 50 wt.% and still more preferably from 15 to 40 wt.% of said FSI-salt based on the total weight of said liquid composition.

12. The composition (COMP) according to any one of Claims 1 to 11, said composition (COMP) having a moisture content equal to or less than 15 ppm, as measured by Karl-Fisher titration.

13. The composition (COMP) according to any one of Claims 1 to 12, said composition (COMP) having a total alcohol content equal to or less than 20 ppm, as measured by head-space gas chromatography (HS-GC-FID).

14. Use of composition (COMP) according to any one of Claims 1 to 13, as a non-aqueous electrolyte solution in a battery.

## Patentansprüche

1. Zusammensetzung [Zusammensetzung (COMP)], umfassend:
- mindestens ein Alkalimetallsalz von Bis(fluorsulfonyl)imid [FSI-Salz];
- mindestens eine Verbindung der Formel (I) oder ein Alkalimetallsalz davon gemäß der Darstellung in den folgenden Formeln in einer Menge unter 25 ppm gemäß Messung mittels Ionenchromatographie:

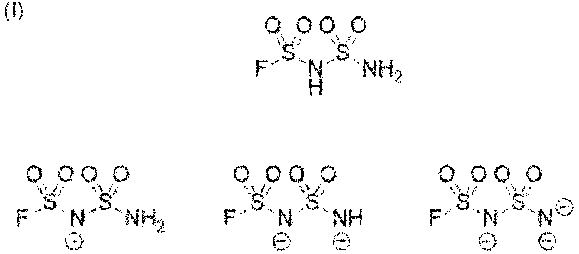

2. Zusammensetzung (COMP) nach Anspruch 1, wobei die Verbindung der Formel (I) oder das Alkalimetallsalz davon in einer Menge von mindestens 0,1 ppm, weiter bevorzugt mindestens 0,5 ppm, noch weiter bevorzugt mindestens 1,0 ppm, vorliegt.

3. Zusammensetzung (COMP) nach Anspruch 1 oder 2, wobei die Zusammensetzung (COMP) mindestens ein Alkalimetallsalz von FSO₃⁻ umfasst.

4. Zusammensetzung (COMP) nach Anspruch 3, wobei das Alkalimetallsalz von FSO₃⁻ gemäß Messung mittels Ionenchromatographie in einer Menge von 0,1 ppm und/oder bis 100 ppm vorliegt.

5. Zusammensetzung (COMP) nach einem der Ansprüche 1 bis 4, wobei die Zusammensetzung (COMP) mindestens eine Verbindung der Formel (II) oder ein Alkalimetallsalz davon gemäß der Darstellung in den folgenden Formeln umfasst:

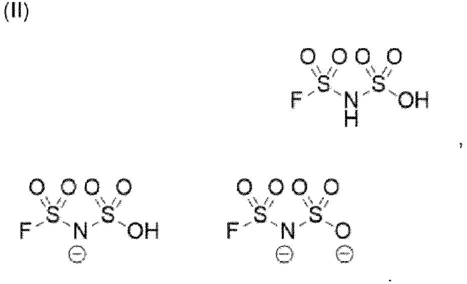

6. Zusammensetzung (COMP) nach Anspruch 5, wobei die Verbindung der Formel (II) oder das Alkalimetallsalz davon gemäß Messung mittels Ionenchromatographie in einer Menge von 0,5 ppm und/oder bis zu 100 ppm vorliegt.

7. Zusammensetzung (COMP) nach einem der Ansprüche 1 bis 6, wobei das Alkalimetall in dem FSI-Salz, in dem Alkalimetallsalz der Verbindung der Formel (I) und in dem Alkalimetallsalz der Verbindung der Formel (II) jeweils aus Lithium, Natrium oder Kalium ausgewählt ist.

8. Zusammensetzung (COMP) nach einem der Ansprüche 1 bis 7, wobei es sich bei der Zusammensetzung (COMP) um eine flüssige Zusammensetzung handelt.

9. Zusammensetzung (COMP) nach Anspruch 8, wobei die Zusammensetzung (COMP) ferner mindestens ein Lösungsmittel [Lösungsmittel (S1)] umfasst.

10. Zusammensetzung (COMP) nach Anspruch 9, wobei das mindestens eine Lösungsmittel (S1) aus der Gruppe ausgewählt ist, die Ethylencarbonat, Propylencarbonat, Butylencarbonat, γ-Butyrolacton, γ-Valerolacton, Dimethoxymethan, 1,2-Dimethoxyethan, Tetrahydrofuran, 2-Methyltetrahydrofuran, 1,3-Dioxan, 4-Methyl-1,3-dioxolan, Ameisensäuremethylester, Essigsäuremethylester, Propionsäuremethylester, Dimethylcarbonat, Ethylmethylcarbonat, Diethylcarbonat, Sulfolan, 3-Methylsulfolan, Dimethylsulfoxid, N,N-Dimethylformamid, N-Methyloxazolidinon, Acetonitril, Valeronitril, Benzonitril, Essigsäureethylester, Essigsäureisopropylester, Essigsäure-n-butylester, Nitromethan und Nitrobenzol umfasst und weiter bevorzugt daraus besteht.

11. Zusammensetzung (COMP) nach einem der Ansprüche 1 bis 10, wobei die Zusammensetzung (COMP) 1 bis 70 Gew.-%, noch weiter bevorzugt 5 bis 50 Gew.-% und noch weiter bevorzugt 15 bis 40 Gew.-% des FSI-Salzes, bezogen auf das Gesamtgewicht der flüssigen Zusammensetzung, umfasst.

12. Zusammensetzung (COMP) nach einem der Ansprüche 1 bis 11, wobei die Zusammensetzung (COMP) gemäß Messung mittels Karl-Fischer-Titration einen Feuchtigkeitsgehalt gleich oder kleiner als 15 ppm aufweist.

13. Zusammensetzung (COMP) nach einem der Ansprüche 1 bis 12, wobei die Zusammensetzung (COMP) gemäß Messung mittels Kopfraum-Gaschromatographie (HS-GC-FID) einen Alkohol-Gesamtgehalt gleich oder kleiner als 20 ppm aufweist.

14. Verwendung der Zusammensetzung (COMP) nach einem der Ansprüche 1 bis 13 als nichtwässrige Elektrolytlösung in einer Batterie.

## Revendications

1. Composition [composition (COMP)] comprenant :
- au moins un sel de métal alcalin de bis(fluorosulfonyl)imide [sel de FSI] ;
- au moins un composé de formule (I) ou un sel de métal alcalin correspondant tel que représenté dans les formules suivantes, en une quantité inférieure à 25 ppm, telle que mesurée par chromatographie ionique :

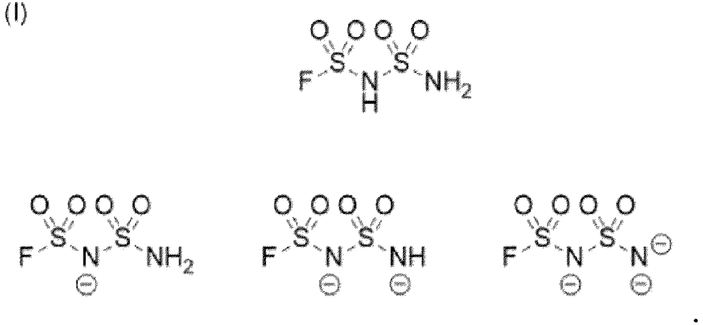

2. Composition (COMP) selon la revendication 1, ledit composé de formule (I) ou le sel de métal alcalin correspondant étant présent en une quantité d'au moins 0,1 ppm, plus préférablement d'au moins 0,5 ppm, encore plus préférablement d'au moins 1,0 ppm.

3. Composition (COMP) selon l'une quelconque des revendications 1 et 2, la composition (COMP) comprenant au moins un sel de métal alcalin de FSO₃⁻

4. Composition (COMP) selon la revendication 3, ledit sel de métal alcalin de FSO₃⁻ étant présent en une quantité allant de 0,1 ppm et/ou jusqu'à 100 ppm, telle que mesurée par chromatographie ionique.

5. Composition (COMP) selon l'une quelconque des revendications 1 à 4, la composition (COMP) comprenant au moins un composé de formule (II) ou un sel de métal alcalin correspondant comme représenté dans les formules suivantes :

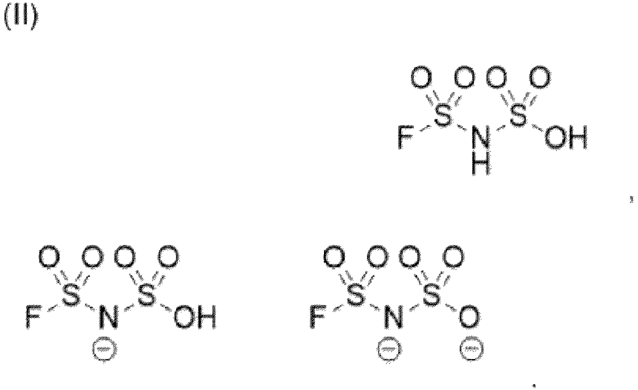

6. Composition (COMP) selon la revendication 5, ledit composé de formule (II) ou le sel de métal alcalin correspondant étant présent en une quantité allant de 0,5 ppm et/ou jusqu'à 100 ppm, telle que mesurée par chromatographie ionique.

7. Composition (COMP) selon l'une quelconque des revendications 1 à 6, ledit métal alcalin dans chacun parmi le sel de FSI, dans le sel de métal alcalin du composé de formule (I) et dans le sel de métal alcalin du composé de formule (II) étant choisi parmi le lithium, le sodium ou le potassium.

8. Composition (COMP) selon l'une quelconque des revendications 1 à 7, ladite composition (COMP) étant une composition liquide.

9. Composition (COMP) selon la revendication 8, ladite composition (COMP) comprenant en outre au moins un solvant [solvant (S1)].

10. Composition (COMP) selon la revendication 9, ledit au moins un solvant (S1) étant choisi dans le groupe comprenant, plus préférablement constitué par : le carbonate d'éthylène, le carbonate de propylène, le carbonate de butylène, la γ-butyrolactone, la γ-valérolactone, le diméthoxyméthane, le 1,2-diméthoxyéthane, le tétrahydrofuranne, le 2-méthyltétrahydrofuranne, le 1,3-dioxanne, le 4-méthyl-1,3-dioxolanne, le formiate de méthyle, l'acétate de méthyle, le propionate de méthyle, le carbonate de diméthyle, le carbonate d'éthyle et de méthyle, le carbonate de diéthyle, le sulfolane, le 3-méthylsulfolane, le diméthylsulfoxyde, le N,N-diméthylformamide, la N-méthyloxazolidinone, l'acétonitrile, le valéronitrile, le benzonitrile, l'acétate d'éthyle, l'acétate d'isopropyle, l'acétate de n-butyle, le nitrométhane et le nitrobenzène.

11. Composition (COMP) selon l'une quelconque des revendications 1 à 10, ladite composition (COMP) comprenant de 1 à 70 % en poids, encore plus préférablement de 5 à 50 % en poids et encore plus préférablement de 15 à 40 % en poids dudit sel de FSI sur la base du poids total de ladite composition liquide.

12. Composition (COMP) selon l'une quelconque des revendications 1 à 11, ladite composition (COMP) ayant une teneur en humidité égale ou inférieure à 15 ppm, telle que mesurée par titrage Karl-Fisher.

13. Composition (COMP) selon l'une quelconque des revendications 1 à 12, ladite composition (COMP) ayant une teneur totale en alcool égale ou inférieure à 20 ppm, telle que mesurée par chromatographie en phase gazeuse dans l'espace de tête (HS-GC-FID).

14. Utilisation d'une composition (COMP) selon l'une quelconque des revendications 1 à 13, en tant qu'une solution non aqueuse d'électrolyte dans une batterie.
